# EUROPÄISCHE PATENTSCHRIFT

(11) **EP 1 584 224 B1**
(45) Veröffentlichungstag und Bekanntmachung des Hinweises auf die Patenterteilung: **14.07.2010**
(21) Anmeldenummer: 05003825.6
(22) Anmeldetag: 23.02.2005
(51) Int. Cl.: A01D 42/00

(54) **Rasenmäher mit Mulchfunktion**
Lawn mower with mulching function
Tondeuse à gazon avec fonction de paillage

(30) Priorität: 05.04.2004 DE 102004016707
(43) Veröffentlichungstag der Anmeldung: 12.10.2005
(73) Patentinhaber: Wolf-Garten GmbH & Co. KG, 57518 Betzdorf (DE)
(72) Erfinder: Held, Peter, 57585 Scheuerfeld (DE); Kipping, Andreas, 57537 Selbach (DE)
(74) Vertreter: Koch, Günther

(56) Entgegenhaltungen:
- EP-A- 1 348 328
- EP-A- 1 374 660
- DE-A1- 4 120 278
- US-A1- 2003 145 572
- US-A1- 2003 217 542

## Beschreibung

Bei den herkömmlichen Sichelrasenmähem wird das vom Messerbalken geschnittene Gut über Luftflügel in einen Auswurfkanal gefördert, aus dem es entweder am Boden abgelegt oder in einem Fangkorb gesammelt wird. Das geschnittene Gras wurde dann in der Regel einem Kompostbehälter zugeführt.

Anstelle dieser Verfahrenstechnik ist neuerdings zunehmend das Mulchen getreten, d.h. es sind Rasenmäher entwickelt worden, die das Schnittgut derart in feinste Partikel aufteilen, dass diese verteilt auf dem Boden abgelegt bleiben und eine Düngung der Grasnabe bewirken können. Das Mulchen mit derartigen Geräten ist jedoch nur dann möglich, wenn der Rasen eine vorbestimmte Höhe nicht überschritten hat. Ein zu hoher Rasen, bedingt beispielsweise durch Urlaubsabwesenheit, kann mit den bekannten Mulchmähern nicht verarbeitet werden. Es ist daher zweckmäßig, einen Mäher zur Verfügung zu haben, der sowohl zum Mähen mit Heckauswurf in einen Fangbehälter als auch zum Mulchen bei kürzerem Gras benutzt werden kann. Ein solcher Mulchmäher ist beispielsweise aus der DE 41 20 278 bekannt. Hierbei ist der Auswurfkanal durch eine kreisbogenförmig gekrümmte Platte absperrbar, die im geschlossenen Zustand einen Teil der Mantelfläche der Mähschüssel bildet, und um eine Achse schwenkbar ist, die benachbart zur Außenwund des Mänschüssel liegt. Hierbei ist entweder ein Seitenauswurf oder ein Heckauswurf vorgesehen. Für einen Seitenauswurf steht für den Auswurfkanal genügend Raum zur Verfügung. Dies ist jedoch beim Heckauswurf nicht der Fall, weil die kreisbogenförmig gekrümmte Mulchklappe seitlich weit ausladen muss, wenn der Auswurfkanal in der üblichen Breite konstruiert werden soll und weit über die Hälfte des Zwischenraumes zwischen den Rädern einnimmt. Wollte man bei gekrümmter Mulchklappe den Auswurfkanal verbreitern, müsste der Raum zwischen den Rädern vergrößert werden.

Der Erfindung liegt daher die Aufgabe zugrunde, einen Rasenmäher mit Mulchfunktion zu schaffen, der einen breiten Heckauswurf besitzt und die Radsätze in der üblichen Dimensionierung aufweist.

Gelöst wird die gestellte Aufgabe durch die im Kennzeichnungsteil des Patentanspruchs 1 angegebenen Merkmale.

Der Erfindung liegt demgemäß die Erkenntnis zugrunde, dass für die Mulchfunktion nicht die komplette Mantelfläche geschlossen sein muss, sondern es vielmehr ausreicht, eine ebene Platte vorzusehen, die in Offenstellung den Auswurfkanal glatt begrenzt, wobei zweckmäßigerweise an der Unterseite eine Abschlussplatte vorgesehen wird, deren innere Kontur konzentrisch zur Mantelfläche verläuft. Durch die ebene (oder schwach gekrümmte) Mulchklappe wird erreicht, dass das Mähergehäuse zur Aufnahme des aufgeklappten Teilstücks der Mantelfläche seitlich nicht mehr stark ausgebaucht werden muss. Es braucht daher bei Anwendung der erfindungsgemäßen Mulchklappe weder die Spurweite noch der Radstand des Fahrgestells vergrößert zu werden.

Die Umstellung der Mulchklappe kann über einen einfachen Handgriff erfolgen, der auf der Drehachse der Mulchklappe liegt. Zweckmäßiger ist es jedoch, ein Gelenkgetriebe zu benutzen, das so ausgelegt ist, dass die beiden Betriebsstellungen der Mulchklappe in den Totlagenpositionen des Getriebes liegen. Dadurch wirken die Betriebskräfte der Mulchklappe nicht als Moment auf den Stellknopf, der dann mit geringen Rastkräften in den Endstellungen gehalten werden kann.

Zweckmäßige Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
Fig. 1 zeigt den Rasenmäher in perspektivischer Darstellung von unten her betrachtet mit geschlossener Mulchklappe;
Fig. 2 ist eine der Fig. 1 entsprechende perspektivische Ansicht bei geöffneter Mulchklappe;
Fig. 3 ist eine schematische Darstellung des Rasenmähers von unten her betrachtet, wobei die in der Mähschüssel umlaufenden Schneid- und Mulchmesser der Übersichtlichkeit wegen weggelassen sind;
Fig. 4 ist eine Teilansicht des Rasenmähers von oben her betrachtet mit der Einstellvorrichtung für die Mulchklappe, die sich in Öffnungsstellung befindet;
Fig. 5 ist eine der Fig. 4 entsprechende Teilansicht mit geschlossener Mulchklappe.

Von dem erfindungsgemäßen Rasenmäher sind nur die für die Erfindung wesentlichen Teile der Übersichtlichkeit wegen dargestellt. Der Rasenmäher weist ein Fahrgestell 10 auf, das höhenverstellbar die Vorderräder 12 und die Hinterräder 14 trägt. Zwischen den Radpaaren ist das Fahrgestell zu einer Mähschüssel 16 ausgeformt.. Die Mähschüssel weist eine kreisrunde Mantelfläche 18 auf, deren Durchmesser im Wesentlichen der Spurweite der Laufräder entspricht, so dass der in der Zeichnung nicht dargestellte, in der Mähschüssel umlaufende Messerbalken einen Streifen schneidet, der die Lauffläche der Räder einschließt. Die Mähschüssel weist eine in Umfangsrichtung (Pfeilrichtung P) ansteigende Deckwand 20 auf, die einen zwischen der Mantelfläche 18 und dem zentralen Messerlager 22 befindlichen Auswurfkanal abdeckt. Der Auswurfkanal tritt etwa tangential über einen Ausschnitt 24 der Mantelfläche 18 nach hinten aus und bildet dort einen divergierenden Endabschnitt 26, der von einer senkrecht zur Radachse stehenden Seitenwand 28 und einer gegenüberliegenden Endwand 30 begrenzt ist, die einen geradlinigen Fortsatz der tangentialen Stufenwand 32 des Auswurfkanals bildet.

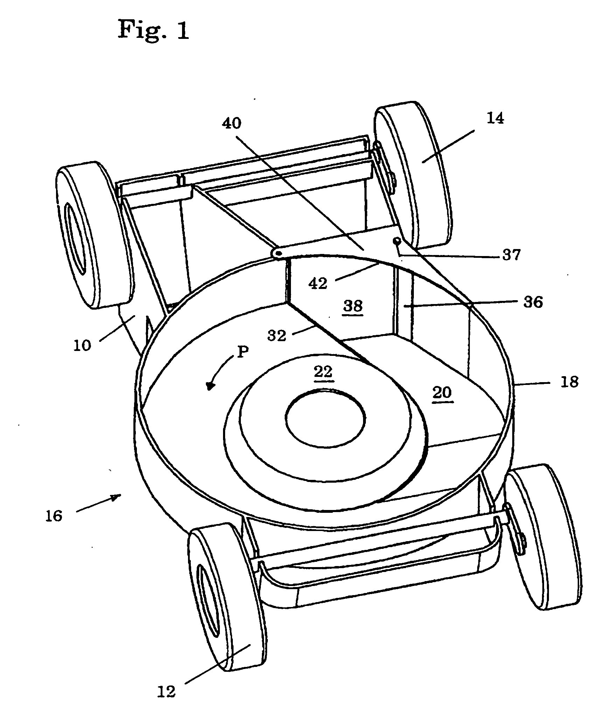

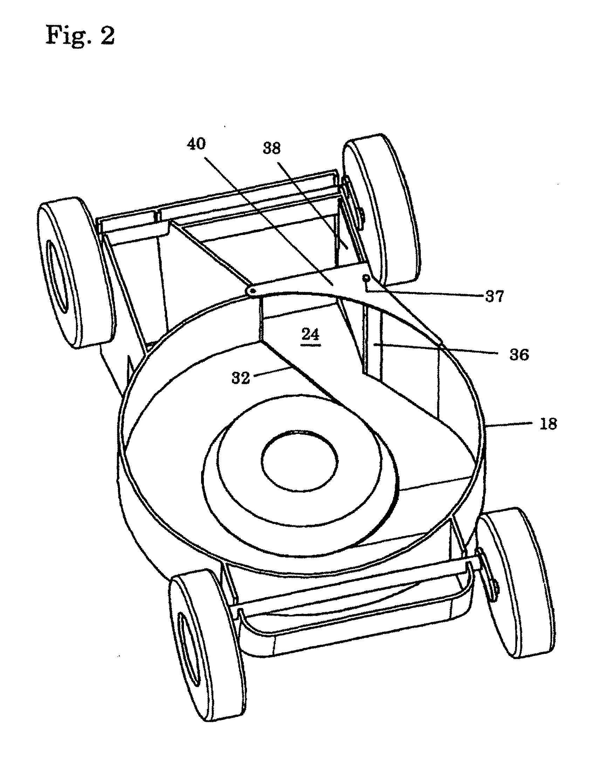

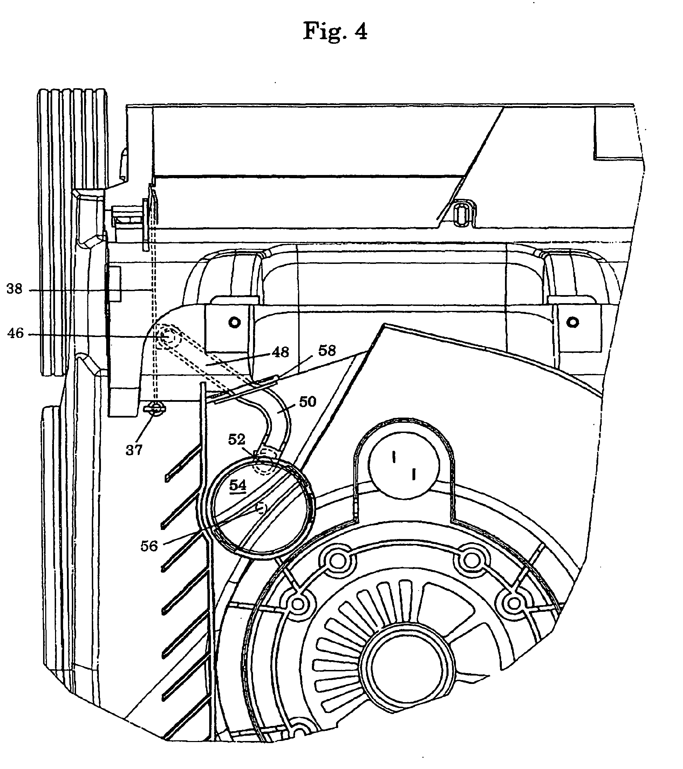

Gegenüberliegend zu dieser Stufenwand 32 liegt eine ebene Leitwand 34, die etwa parallel zur Stufenwand 32 verläuft und tangential in die Mantelfläche 18 übergeht und diese mit der Seitenwand 28 verbindet. Am Übergang zwischen der Leitwand 34 und der Seitenwand 28 ist hinter einem inneren Vorsprung 36 eine vertikale Achse 37 gelagert, um die eine Mulchklappe 38 schwenkbar ist. Diese Mulchklappe 38 ist in den Fig. 1, 3 und 5 in geschlossener Stellung gezeichnet, d.h. sie bildet in dieser Stellung einen Teil der Mantelfläche 18 und schließt dadurch den Auswurfkanal, so dass das Mähgut innerhalb der Mähschüssel mehrfach umgelenkt, in feine Partikel zerkleinert und auf dem Boden abgelegt wird. Die Klappe 38 ist in eine Öffnungsstellung schwenkbar, die in den Fig. 2 und 4 dargestellt ist. In dieser Öffnungsstellung liegt die Mulchklappe 38 an der Seitenwand 28 an und bildet damit eine seitliche Begrenzung des Endabschnitts 26 des Auswurfkanals. An diesen Auswurfkanal 26 kann ein Fangkorb oder eine andere Fangvorrichtung angeschlossen werden, um das geschnittene Gras aufzusammeln.

Wie aus der Zeichnung ersichtlich, ist die Mulchklappe 38 als ebene Platte ausgebildet und liegt damit in Öffnungsstellung der Seitenwand 28 unmittelbar an. Diese ebene Ausbildung ist vorteilhaft gegenüber einer gewölbten, der Mantelfläche 18 angepassten Platte, weil die ebene Klappe im geöffneten Zustand seitlich nicht ausbaucht, was eine Vergrößerung des axialen oder radialen Radabstandes erfordern würde.

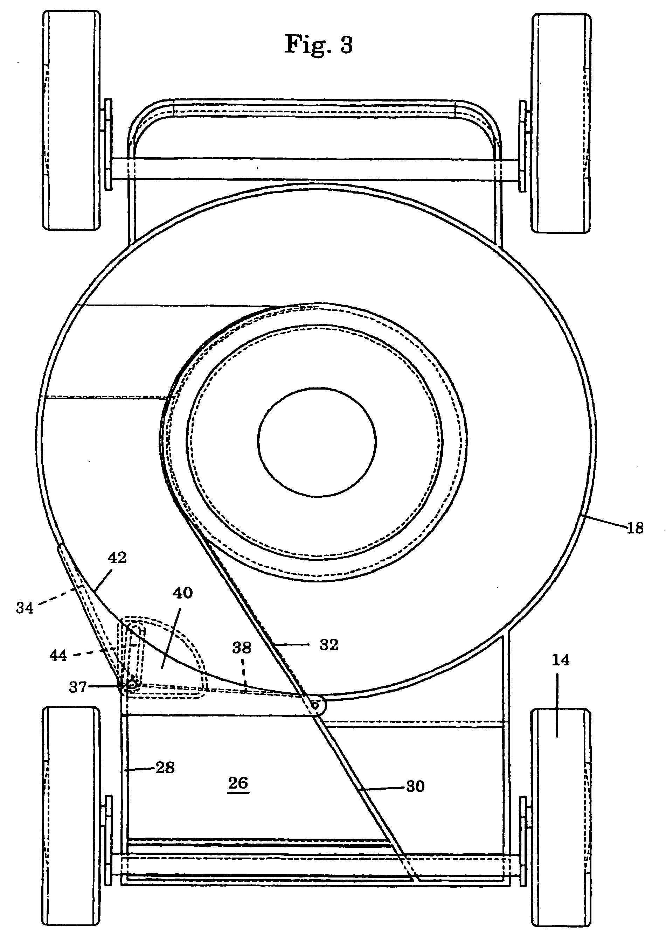

Wie insbesondere aus Fig. 3 ersichtlich, verlaufen die Leitwand 34 und die Mulchklappe 38 im geschlossenen Zustand etwa tangential zu der Mantelfläche 18. Sie bilden damit einen von der Kreisform abweichenden nach außen vorstehenden Wandabschnitt. Es hat sich jedoch gezeigt, dass dies den Mulchvorgang nicht beeinträchtigt, und insbesondere dann nicht, wenn in diesem Bereich die Mähschüssel von unten her durch eine Abschlussplatte 40 abgedeckt wird, die, wie insbesondere aus Fig. 3 ersichtlich, mit ihrer inneren Begrenzungskante 42 die kreisförmige Mantelfläche 18 fortsetzt. Auf diese Weise wird der durch die Wand 34 und die Mulchklappe 38 nach außen ausgebauchte Bereich der Mähschüssel nach unten durch die Abschlussplatte 40 abgedeckt, wodurch der Mulchvorgang wesentlich verbessert wird.

Die Mulchklappe kann durch einen Handgriff 44 verschwenkt werden, der auf der die Mulchklappe 38 tragenden Achse 37 sitzt. Die Stellbewegung des Handgriffs 44 ergibt sich aus Fig. 3.

Hierbei müssen die Endbewegungen der Mulchklappe 38 durch Raststellungen fixiert werden, damit die Klappe in Mulchstellung nicht durch das geschnittene Gras geöffnet wird und in Öffnungsstellung der Querschnitt des Auswurfkanals erhalten bleibt.

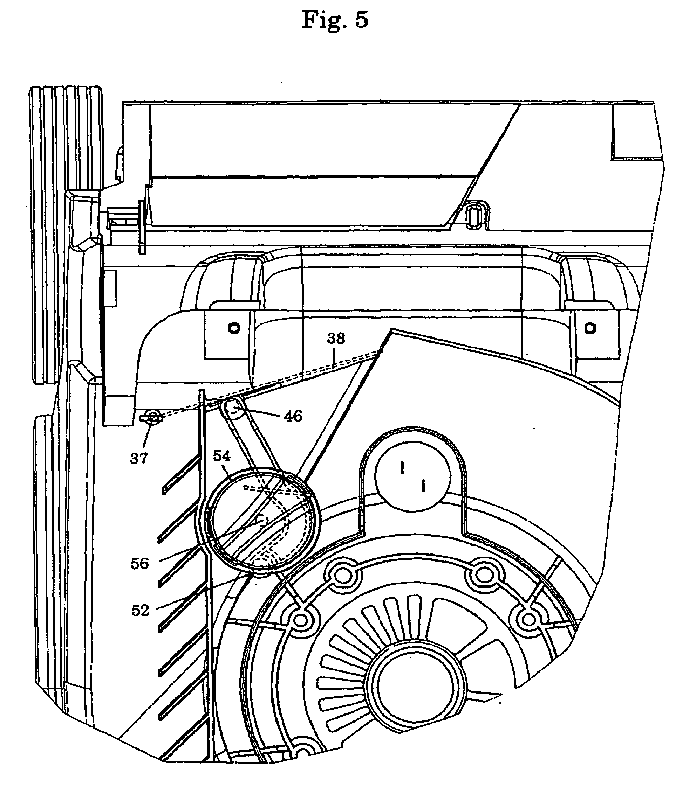

Vorteilhafter ist jedoch, wenn die Einstellung der Mulchklappe über ein Getriebe vorgenommen wird, wie dies aus den Fig. 4 und 5 ersichtlich ist. Gemäß diesem Ausführungsbeispiel ist an der Mulchklappe 38 über ein erstes Drehgelenk 46 ein gerade verlaufender Abschnitt 48 eines Lenkers angelenkt, dessen anschließender bogenförmig gekrümmter Abschnitt 50 über ein zweites Drehgelenk 52 am äußeren Umfang eines Stellknopfes 54 angelenkt ist, der um eine Achse 56 einstellbar ist. Die Lage der Achsen 56, 52 und 46 ist dabei derart gewählt, dass das zweite Drehgelenk in beiden Endstellungen (geöffnete bzw. geschlossene Mulchklappe) über die Totpunktstellung herausgehoben ist, wodurch eine Verriegelung in beiden Stellungen eintritt, ohne dass eine Rastverbindung üblicher Art notwendig wäre. Dadurch wirken bei geschlossener Mulchklappe die Betriebskräfte des Schnittgutes, die versuchen, die Mulchklappe zu öffnen, nicht als Moment auf den Stellknopf 54. Der Lenker ist zwischen den Abschnitten 48 und 50 mit einer Abdeckplatte 58 versehen, die die Gehäuseöffnung, durch die der Lenker hindurchtritt, wenigstens in der Fangstellung verschließt. Somit kann kein Schnittgut über die Gehäuseöffnung des Lenkers in das Motorgehäuse eindringen. In der Mulchstellung wird diese Öffnung von der Mulchklappe verschlossen.

### Bezugszeichenliste

- 10: Fahrgestell
- 12: Vorderräder
- 14: Hinterräder
- 16: Mähschüssel
- 18: Mantelfläche
- 20: Deckwand
- 22: Messerlager
- 24: Ausschnitt
- 26: Endabschnitt
- 28: Seitenwand
- 30: Endwand
- 32: Stufenwand
- 34: Leitwand
- 36: Vorsprung
- 37: Achse
- 38: Mulchklappe
- 40: Abschlussplatte
- 42: Begrenzungskante
- 44: Handgriff
- 46: 1. Drehgelenk
- 48: gerader Abschnitt Lenker
- 50: gekrümmter Abschnitt Lenker
- 52: 2. Drehgelenk
- 54: Stellknopf
- 56: Achse
- 58: Abdeckplatte

## Patentansprüche

1. Rasenmäher mit Heckauswurf und mit Mulchfunktion, bei dem ein Messerbalken in einer Mähschüssel (16) umläuft, an die ein im Wesentlichen tangential verlaufender Auswurfkanal anschließt, der im Mulchbetrieb durch eine Mulchklappe (38) absperrbar ist, die als ebene oder schwach gekrümmte Platte ausgebildet und um eine Achse (37) verschwenkbar ist, die an einer Stelle außerhalb des die Mantelfläche (18) umschreibenden Kreises liegt und über eine im Wesentlichen gerade Leitwand (34) tangential in die Mantelfläche (18) übergeht und dass die Mulchklappe (38) im geschlossenen Zustand etwa tangential zur Mantelfläche (18) verläuft und diese und die Leitwand (34) einen von der Kreisform abweichenden nach außen vorstehenden Wandabschnitt bilden.

2. Rasenmäher nach Anspruch 1,
**dadurch gekennzeichnet, dass** der Bereich, der von Leitwand (34) und geschlossener Mulchklappe (38) außerhalb der Mantelfläche (18) gebildet wird, auf der Unterseite durch eine Abschlussplatte (40) überbrückt ist.

3. Rasenmäher nach Anspruch 2,
**dadurch gekennzeichnet, dass** die innere Begrenzungskante (42) der Abschlussplatte (40) einen Kreisbogen bildet, der im Bereich des Auswurfkanals auf der Kreisbahn der Mantelfläche (18) liegt.

4. Rasenmäher nach Anspruch 1,
**dadurch gekennzeichnet, dass** die Leitwand (34) im Wesentlichen parallel zu der Stufenwand (32) verläuft, die tangential in die Innenwand des Ringkanals übergeht, der oberseitig durch eine schraubenlinienförmig (P) ansteigende Deckwand (20) begrenzt ist.

5. Rasenmäher nach den Ansprüchen 1 bis 4,
**dadurch gekennzeichnet, dass** der Endabschnitt (26) des Auswurfkanals durch eine Seitenwand (28) begrenzt ist, die senkrecht zur Radachse benachbart zu dem einen Hinterrad verläuft.

6. Rasenmäher nach Anspruch 5,
**dadurch gekennzeichnet, dass** die der Seitenwand (28) gegenüberliegende Endwand des Auswurfkanals im Wesentlichen geradlinig an die tangential verlaufende Stufenwand (32) anschließt.

7. Rasenmäher nach Anspruch 5,
**dadurch gekennzeichnet, dass** die Mulchklappe (38) in Offenstellung an der Seitenwand (28) des Auswurfkanals anliegt.

8. Rasenmäher nach einem der Ansprüche 1 bis 7,
**dadurch gekennzeichnet, dass** auf der die Mulchklappe (38) tragenden Achse (37) ein von oben her betätigbarer Handgriff (44) angeordnet ist.

9. Rasenmäher nach Anspruch 1, bei welchem die Schwenkachse (37) der Mulchklappe (38) am Auswurfende der Leitwand (34) hinter einem Vorsprung (36) angeordnet ist.

10. Rasenmäher nach Anspruch 1,
**dadurch gekennzeichnet, dass** an der Mulchklappe (38) ein Lenker mit einem ersten Abschnitt (48) angelenkt ist, der mit seinem zweiten Abschnitt (50) über ein zweites Drehgelenk (52) an einem drehbar gelagerten Stellknopf (54) derart angelenkt ist, dass in beiden Betriebsstellungen die Mulchklappe (38) in den Totlagenpositionen des so gebildeten Getriebes liegt, dass der erste Abschnitt (48) des Lenkers gerade und der zweite Abschnitt (50) gekrümmt und in Öffnungsstellung die Drehachse (56) des Stellknopfes (54) umgebend ausgebildet ist, wobei der Lenker (48, 50) eine Abdeckplatte (58) aufweist.

## Claims

1. A lawnmower with rear discharge and with a mulching function, in which a blade bar rotates in a mowing tray (16) which is adjoined by a substantially tangentially extending discharge passage which in the mulching mode can be closed off by a mulching flap (38) which is in the form of a flat or slightly curved plate and is pivotable about an axis (37) which is at one side outside the circle circumscribing the peripheral surface (18) and goes tangentially into the peripheral surface (18) by way of a substantially straight guide wall (34) and the mulching flap (38) in the closed condition extends substantially tangentially relative to the peripheral surface (18) and same and the guide wall (34) form an outwardly projecting wall portion deviating from the circular shape.

2. A lawnmower according to claim 1 **characterised in that** the region formed by the guide wall (34) and the closed mulching flap (38) outside the peripheral surface (18) is bridged on the underside by a closure plate (40).

3. A lawnmower according to claim 2 **characterised in that** the inner boundary edge (42) of the closure plate (40) forms a circular arc which lies in the region of the discharge passage on the circular path of the peripheral surface (18).

4. A lawnmower according to claim 1 **characterised in that** the guide wall (34) extends substantially parallel to the step wall (32) which goes tangentially into the inside wall of the annular passage which is delimited at the top side by a cover wall (20) rising in the shape of a helical line (P).

5. A lawnmower according to claims 1 to 4 **characterised in that** the end portion (26) of the discharge passage is delimited by a side wall (28) which extends perpendicularly to the wheel axle adjacent to the one rear wheel.

6. A lawnmower according to claim 5 **characterised in that** the end wall of the discharge passage, that is opposite to the side wall (28), substantially rectilinearly adjoins the tangentially extending step wall (32).

7. A lawnmower according to claim 5 **characterised in that** the mulching flap (38) in the open position bears against the side wall (28) of the discharge passage.

8. A lawnmower according to one of claims 1 to 7 **characterised in that** a handle (44) actuable from above is arranged on the shaft (37) bearing the mulching flap (38).

9. A lawnmower according to claim 1 in which the pivot shaft (37) of the mulching flap (38) is arranged at the discharge end of the guide wall (34) behind a projection (36).

10. A lawnmower according to claim 1 **characterised in that** a link is pivoted to the mulching flap (38) with a first portion (48), which link is pivoted with its second portion (50) by way of a second rotary joint (52) to a rotatably mounted adjusting knob (54) in such a way that in both operating positions the mulching flap (38) is in the dead centre positions of the transmission formed **in that** way, the first portion (38) of the link is straight and the second portion (50) is curved and in the open position is adapted to extend around the axis of rotation (56) of the adjusting knob (54), wherein the link (48, 50) has a cover plate (58).

## Revendications

1. Tondeuse à gazon à éjection par l'arrière et à fonction de formation d'un paillis, dans laquelle une barre de coupe accomplit une révolution dans une cuvette de tonte (16) à laquelle se raccorde un canal d'éjection qui s'étend pour l'essentiel tangentiellement et peut être obturé, en mode formation de paillis, par un volet (38) à paillis réalisé sous la forme d'un panneau plan ou légèrement arqué, apte à pivoter autour d'un axe (37) qui occupe un emplacement situé à l'extérieur de la circonférence circonscrivant la surface périphérique (18), et fusionne tangentiellement dans ladite surface périphérique (18) par l'intermédiaire d'une paroi directrice (34) substantiellement rectiligne, sachant que ledit volet (38) à paillis s'étend à peu près tangentiellement à ladite surface périphérique (18), à l'état fermé, ladite surface et ladite paroi directrice (34) formant une zone de cloisonnement qui fait saillie vers l'extérieur, et dont le profil s'écarte de la configuration circulaire.

2. Tondeuse à gazon selon la revendication 1,
**caractérisée par le fait que** la région formée par la paroi directrice (34) et par le volet (38) à paillis en position fermée, à l'extérieur de la surface périphérique (18), est coiffée par un panneau d'obturation (40) à la face inférieure.

3. Tondeuse à gazon selon la revendication 2,
**caractérisée par le fait que** l'arête intérieure (42) de délimitation du panneau d'obturation (40) forme un arc de cercle situé, dans la région du canal d'éjection, sur la trajectoire circulaire de la surface périphérique (18).

4. Tondeuse à gazon selon la revendication 1,
**caractérisée par le fait que** la paroi directrice (34) s'étend, pour l'essentiel, parallèlement à la paroi étagée (32) fusionnant, tangentiellement, dans la paroi intérieure du canal annulaire délimité, en partie haute, par une paroi de recouvrement (20) décrivant une pente ascendante au tracé hélicoïdal (P).

5. Tondeuse à gazon selon l'une des revendications 1 à 4,
**caractérisée par le fait que** la région extrême (26) du canal d'éjection est délimitée par une paroi latérale (28) s'étendant perpendiculairement à l'axe des roues, au voisinage de l'une des roues arrière.

6. Tondeuse à gazon selon la revendication 5,
**caractérisée par le fait que** la paroi d'extrémité du canal d'éjection, située en vis-à-vis de la paroi latérale (28), se rattache pour l'essentiel rectilignement à la paroi étagée (32) s'étendant tangentiellement.

7. Tondeuse à gazon selon la revendication 5,
**caractérisée par le fait que** le volet (38) à paillis est en applique, en position ouverte, contre la paroi latérale (28) du canal d'éjection.

8. Tondeuse à gazon selon l'une des revendications 1 à 7,
**caractérisée par le fait qu'**une poignée (44), pouvant être actionnée par en haut, se trouve sur l'axe (37) portant le volet (38) à paillis.

9. Tondeuse à gazon selon la revendication 1, dans laquelle l'axe de pivotement (37) du volet (38) à paillis est situé à l'extrémité d'éjection de la paroi directrice (34), derrière une zone protubérante (36).

10. Tondeuse à gazon selon la revendication 1,
**caractérisée par le fait qu'**une biellette, articulée sur le volet (38) à paillis par un premier tronçon (48), est articulée par son second tronçon (50), par l'entremise d'une seconde articulation tournante (52), sur un bouton de réglage (54) monté à rotation, de façon telle que ledit volet (38) à paillis occupe, dans les deux positions de service, les emplacements de point mort de la transmission ainsi formée ; et **par le fait que** ledit premier tronçon (48) de ladite biellette est de réalisation rectiligne, et ledit second tronçon (50) est de réalisation arquée ceinturant l'axe de rotation (56) dudit bouton de réglage (54), en position ouverte, ladite biellette (48, 50) étant munie d'une platine d'occultation (58).
